# FASCICULE DE BREVET EUROPEEN

(11) **EP 0 894 659 B1**
(45) Date de publication et mention de la délivrance du brevet: **10.10.2001**
(21) Numéro de dépôt: 98401895.2
(22) Date de dépôt: 24.07.1998
(51) Int. Cl.: B60K 5/12, F16C 7/04, F16F 15/08

(54) **Biellette de reprise de couple pour moteur à combustion interne**
Drehmomentenanlaufschwingarm für Verbrennungsmotor
Torque rod for internal combustion engine

(30) Priorité: 30.07.1997 FR 9709708
(43) Date de publication de la demande: 03.02.1999
(73) Titulaire: HUTCHINSON, 75008 Paris (FR)
(72) Inventeur: Garaud, Patrick, 28200 St Denis Les Ponts (FR); Girard, André, Bouy, 18500 Melun S/Yevre (FR); Chaussepied, Jean-Noel, 18100 Vierzon (FR); Verspieren, Christophe, 18100 Vierzon (FR)
(74) Mandataire: Picard, Jean-Claude Georges

(56) Documents cités:
- EP-A- 0 192 380
- EP-A- 0 199 240
- EP-A- 0 647 787
- EP-A- 0 691 481
- FR-A- 2 292 153
- FR-A- 2 703 414
- FR-A- 2 736 008
- GB-A- 2 010 438

## Description

La présente invention concerne une biellette de reprise de couple pour moteur à combustion interne de véhicule, destinée à relier le moteur à la structure du véhicule, du type comportant un corps rigide allongé dont les extrémités opposées, en forme d'anneaux, sont reliées intérieurement, par une masse élastique, à une douille d'articulation, respectivement une première douille de liaison audit moteur et une seconde douille de liaison à ladite structure.

Des biellettes de ce type sont déjà connues, par exemple par le brevet français FR-A-2 722 259 au nom de la demanderesse, qui concerne plus particulièrement une biellette équilibrée, ce qui permet de minimiser la force transmise transversalement d'une articulation à l'autre, entre le moteur (source de vibrations) et la structure du véhicule.

Habituellement on conçoit les biellettes de reprise de couple de façon à minimiser leur masse tout en respectant une contrainte de résistance à un effort maximal. On aboutit ainsi à un corps de biellette en tôle d'acier emboutie, voire en plastique ou en aluminium extrudé.

Le problème que l'invention vise à résoudre est le suivant.

Une biellette possédant un corps suspendu entre deux articulations, il est inévitable qu'elle possède six modes de corps rigide, indépendamment des modes flexibles qui sont à des fréquences beaucoup plus élevées, à savoir quatre modes propres transversaux, un mode longitudinal et un mode de rotation longitudinale (non gênant car pas excité par les vibrations du moteur). Sous l'excitation forcée du moteur de la voiture, de fréquence variable en général de 20 à 200 Hz (harmonique 2 pour un moteur à quatre cylindres en ligne), les modes se traduisent par des pics de raideur dynamique, préjudiciables à un bon filtrage des vibrations du moteur vers la caisse. Il est également souhaitable d'obtenir une faible raideur de 400 à 1000 Hz, zone dans laquelle se trouvent également des modes propres de la biellette.

Le but de la présente invention est d'améliorer sous ces aspects les biellettes existantes.

A cet effet, la biellette a été conçue en tenant compte de chaque mode afin qu'il ne pénalise pas la raideur dynamique. en transversal, la raideur devrait être assez faible puisqu'une biellette est quasiment rotulée à ses extrémités. En pratique, il n'en est rien car les effets d'inertie sont importants. En particulier il existe dans chaque plan contenant la biellette deux modes propres transversaux (soit quatre en tout). Ces quatre modes transversaux ont été placés assez bas, entre 200 et 400 Hz, car dans cette zone il n'y a pas beaucoup d'excitation venant du moteur. De préférence, on place ces quatre modes juste après la zone des vibrations forcées du moteur (de 20 à 200 Hz) c'est-à-dire vers 300 Hz. Cela a conduit, de façon surprenante, à l'adoption d'un corps de biellette en fonte, par conséquent plus lourd que les corps classiques.

Si l'on considère maintenant la raideur longitudinale du corps de la biellette, on constate qu'elle est sensiblement égale à la raideur longitudinale de l'articulation la plus souple, puisque les raideurs longitudinales des deux articulations sont en série. La raideur longitudinale du corps de la biellette étant déterminée par les efforts que devra reprendre la pièce et le débattement autorisé, il conviendra que cette raideur augmente peu avec la fréquence.

Conformément à une autre disposition de l'invention, ceci est obtenu grâce au fait que la première douille, vue suivant son axe, a la forme générale d'un trapèze et est reliée à l'anneau d'extrémité correspondant par deux blocs élastiques en forme de chevron, lesquels blocs relient les deux faces latérales inclinées de ladite première douille aux flancs intérieurs en regard dudit anneau.

En effet, avec une articulation classique (généralement cylindrique) la dimension des blocs élastiques ou bras est imposée par le débattement à respecter, et on doit ajuster la raideur en jouant sur le module d'élasticité du caoutchouc. Il faut en général utiliser un caoutchouc très dur, mais qui est aussi amortissant, ce qui pose problème. La disposition qui précède permet de résoudre ce problème ; cette articulation permet de diminuer la rigidification dynamique dans le domaine du bourdonnement (20 à 200 Hz) ; au-delà, c'est l'effet de masse qui joue.

Quant au mode propre longitudinal du corps, il convient d'éviter qu'il ne vienne augmenter également la raideur longitudinale par son pic. Sa fréquence est alors imposée par la raideur longitudinale de l'articulation la plus raide, puisque dans ce cas les raideurs sont en parallèle.

A cet effet, et selon encore une autre disposition de l'invention, la seconde douille, de dimensions plus faibles que la première, est cylindrique et est reliée à l'anneau d'extrémité correspondant par des bras élastiques, ce qui diminue la hauteur du pic en question.

L'équilibrage de la biellette, selon le brevet mentionné plus haut, permettra de minimiser encore la contribution de ces différents modes de vibration sur la raideur transversale.

Il est rappelé que cet équilibrage consiste essentiellement à répartir la masse de la biellette de façon telle que chaque mode ait son noeud placé sur une articulation, ce qui peut éventuellement conduire à ajouter de la masse aux extrémités de la biellette. De la sorte, les modes existent mais n'ont que peu d'effet sur les courbes de raideur transversale, qui de plus tendent vers une valeur extrêmement faible à haute fréquence.

Une biellette conforme à l'invention est représentée à titre d'exemple nullement limitatif sur le dessin annexé dans lequel :

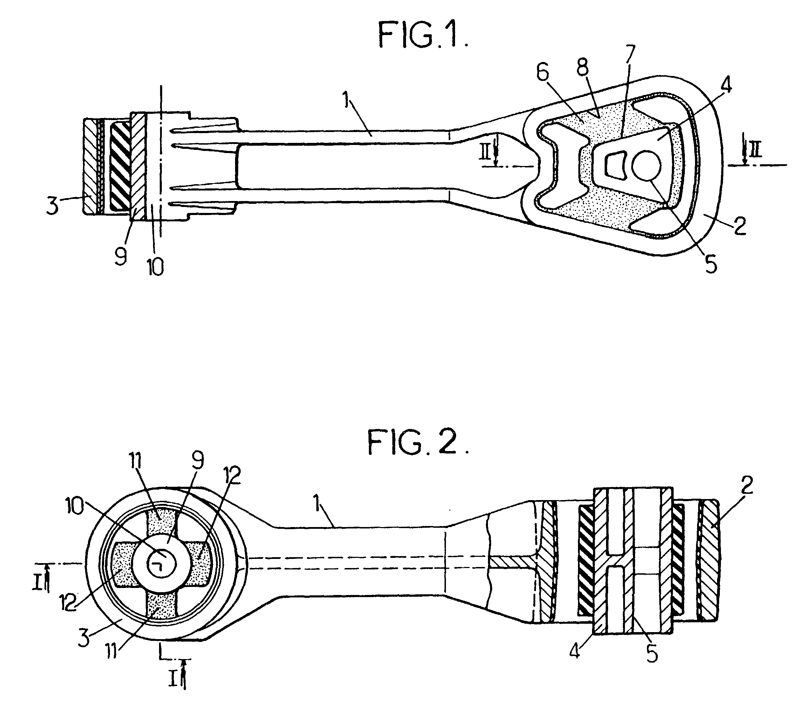

- la figure 1 est une vue en plan montrant la seconde douille, dont l'axe est orthogonal à celui de la première douille, en demi-coupe axiale selon la ligne I-I de la figure 2 ; et
- la figure 2 est une vue de profil montrant la seconde douille en plan et la première douille en coupe axiale selon la ligne II-II de la figure 1.

Sur les figures on a référencé en 1 le corps en fonte de la biellette. Ses extrémités s'élargissent dans deux plans orthogonaux entre eux pour constituer d'une part un anneau en forme de trapèze à angles arrondis 2 et d'autre part un anneau cylindrique 3, de dimensions plus réduites. Il est prévu que l'articulation au moteur du véhicule s'effectue par l'intermédiaire d'une première douille d'aluminium également en forme de trapèze 4, pourvue d'un trou cylindrique 5 pour l'articulation sur le moteur. La liaison élastique entre douille 4 et anneau 2 s'effectue par l'intermédiaire de deux blocs élastiques 6 en caoutchouc par exemple à faible coefficient d'amortissement, la tangente de l'angle de perte étant de préférence inférieure à 0,1 environ. Les faces latérales inclinées 7 de la douille 4 sont pratiquement parallèles aux flancs intérieurs en regard 8 de l'anneau 2, et les extrémités des blocs 6 qui sont adhérisées aux flancs 8 sont décalées vers l'autre extrémité de la biellette, par rapport à la douille 4, de sorte que ces deux blocs présentent ensemble la forme d'un chevron, ce qui permet d'obtenir l'effet mentionné plus haut.

A l'autre extrémité de la biellette, la liaison articulée à la structure du véhicule s'effectuera par une seconde douille cylindrique 9 à trou de liaison 10 dont l'axe est orthogonal à celui du trou 5, cette douille cylindrique étant reliée intérieurement à l'anneau 3 par deux bras élastiques radiaux diamétralement opposés 11, perpendiculaires à l'axe longitudinal de la biellette. Ces deux bras sont par exemple en un caoutchouc à fort coefficient d'amortissement, la tangente de l'angle de perte étant de préférence supérieure à 0,1 environ. La seconde douille 9 porte également deux blocs élastiques de butée longitudinale diamétralement opposés, référencés en 12.

La biellette qui vient d'être décrite peut être équilibrée avec des masses additionnelles, comme selon le brevet français mentionné au début.

Outre le fait qu'elle permet de résoudre ainsi les différents problèmes posés, la biellette selon l'invention présente les avantages supplémentaires suivants :

Le corps en fonte ne nécessite aucune reprise d'usinage, ni pour l'anneau cylindrique 3 ni pour le moulage de l'anneau en forme de trapèze 2, grâce à sa grande précision de fabrication.

La forme en chevron des blocs élastiques 6 permet de mouler directement dans le corps de la biellette, car aucun rétreint n'est nécessaire, au contraire d'une articulation cylindrique.

La peinture anticorrosion est remplacée par le fait que le corps est complètement trempé dans l'adhésif avant le moulage, ce qui économise une opération.

## Revendications

1. Biellette de reprise de couple pour moteur à combustion interne de véhicule, destinée à relier le moteur à la structure du véhicule, du type comportant un corps rigide allongé dont les extrémités opposées, en forme d'anneaux, sont reliées intérieurement, par une masse élastique, à une douille d'articulation, respectivement une première douille de liaison audit moteur et une seconde douille de liaison à ladite structure, **caractérisée en ce que** ledit corps est en fonte, **en ce que** la première douille (4), vue suivant son axe, a la forme générale d'un trapèze et est reliée à l'anneau d'extrémité correspondant (2) par deux blocs élastiques (6) en forme de chevron, lesquels blocs (6) relient les deux faces latérales inclinées (7) de ladite première douille (4) aux flancs intérieurs en regard (8) dudit anneau (2), et **en ce que** la seconde douille (9), de dimensions plus faibles que la première (4), est cylindrique et est reliée à l'anneau d'extrémité correspondant (3) par des bras élastiques (11).

2. Biellette selon la revendication 1, **caractérisée en ce que** le coefficient d'amortissement du matériau constituant lesdits blocs élastiques (6) est suffisamment faible pour que la tangente de l'angle de perte soit inférieure à 0,1 environ.

3. Biellette selon la revendication 1 ou 2, **caractérisée en ce que** le coefficient d'amortissement du matériau constituant lesdits bras élastiques (11) est suffisamment élevé pour que la tangente de l'angle de perte soit supérieure à 0,1 environ.

4. Biellette selon l'une quelconque des revendications précédentes, **caractérisée en ce que** les axes d'articulation de la première douille (4) et de la seconde douille (9) sont orthogonaux entre eux.

5. Biellette selon l'une quelconque des revendications précédentes, **caractérisée en ce que** les extrémités desdits blocs élastiques (6) qui sont adhérisées aux flancs intérieurs (8) de l'anneau d'extrémité correspondant (2) sont décalées vers l'autre extrémité de la biellette, par rapport à ladite première douille (4), de sorte que ces blocs présentent ensemble la forme d'un chevron.

6. Biellette selon l'une quelconque des revendications précédentes, **caractérisée en ce que** ladite seconde douille (9) est reliée intérieurement à l'anneau correspondant (3) par deux bras élastiques radiaux (11) diamétralement opposés et perpendiculaires à l'axe longitudinal de la biellette.

7. Biellette selon l'une quelconque des revendications précédentes, **caractérisée en ce que** ladite seconde douille (9) porte deux blocs élastiques de butée en direction longitudinale (12) de la biellette.

## Claims

1. Torque-damping link for an internal combustion engine of a vehicle, designed to link the engine to the vehicle structure, of the type comprising an elongate rigid body, the annular-shaped opposite ends of which are linked internally, by an elastic mass, to an adjusting sleeve, being respectively a first adjusting sleeve linked to said engine and a second adjusting sleeve linked to said structure, **characterised in that** said body is made from cast iron, **in that** the first adjusting sleeve (4), viewed along its axis, is generally trapezoid in shape and is linked to the corresponding end ring (2) by two elastic blocks (6) in a chevron arrangement, which blocks (6) link the two inclined lateral faces (7) of said first adjusting sleeve (4) to the facing inner faces (8) of said ring (2) and **in that** the second adjusting sleeve (9), of smaller dimensions than the first (4), is cylindrical and is linked to the corresponding end ring (3) by means of elastic arms (11).

2. Link as claimed in claim 1, **characterised in that** the damping coefficient of the material used for said elastic blocks (6) is sufficiently low so that the tangent of the loss angle is less than approximately 0.1.

3. Link as claimed in claim 1 or 2, **characterised in that** the damping coefficient of the material used for said elastic arms (11) is sufficiently high so that the tangent of the loss angle is greater than approximately 0.1.

4. Link as claimed in any one of the preceding claims, **characterised in that** the articulation axes of the first adjusting sleeve (4) and the second adjusting sleeve (9) are orthogonal to one another.

5. Link as claimed in any one of the preceding claims, **characterised in that** the ends of said elastic blocks (6) which are adhered to the inner faces (8) of the corresponding end ring (2) are offset from said first adjusting sleeve (4) towards the other end of the link so that these blocks together form a chevron arrangement.

6. Link as claimed in any one of the preceding claims, **characterised in that** said second adjusting sleeve (9) is internally linked to the corresponding ring (3) by two radial elastic arms (11) which are diametrically opposed and perpendicular to the longitudinal axis of the link.

7. Link as claimed in any one of the preceding claims, **characterised in that** said second adjusting sleeve (9) bears two elastic thrust blocks in the longitudinal direction (12) of the link.

## Patentansprüche

1. Drehmomentanlaufschwingarm für Verbrennungsmotoren von Fahrzeugen, der dazu vorgesehen ist, den Motor mit dem Fahrzeugaufbau zu verbinden, und aus einem starren, länglichen Körper besteht, dessen beide ringförmige Enden innen durch eine elastische Masse mit einer Gelenkbuchse bzw. mit einer ersten Verbindungsbuchse zu diesem.Motor und einer zweiten Verbindungsbuchse zu diesem Fahrzeugaufbau verbunden sind,
**dadurch gekennzeichnet,**
**dass** dieser Körper aus Gusseisen besteht und dass die erste Buchse (4), in Achsrichtungbetrachtet allgemein trapezförmig ist und durch zwei elastische Blöcke (6) in Zickzackform mit dem entsprechenden Endring (2) verbunden ist, wobei diese Blöcke (6) die beiden geneigten Seitenflächen (7) dieser ersten Buchse (4) mit den gegenüberliegenden Innenflanken (8) dieses Rings (2) verbinden, und dass die zweite Buchse (9), die kleiner bemessen ist als die erste (4), zylinderförmig ist und mit dem entsprechenden Endring (3) durch elastische Arme (11) verbunden ist.

2. Schwingarm nach Anspruch 1,
**dadurch gekennzeichnet,**
**dass** der Dämpfungskoeffizient des Materials, aus dem die genannten elastischen Blöcke (6) bestehen, ausreichend niedrig ist, so dass die Tangente des Verlustwinkels weniger als ca. 0,1 beträgt.

3. Schwingarm nach Anspruch 1 oder 2,
**dadurch gekennzeichnet,**
**dass** der Dämpfungskoeffizient des Materials, aus dem die genannten elastischen Arme (11) bestehen, ausreichend hoch ist, so dass die Tangente des Verlustwinkels mehr als ca. 0,1 beträgt.

4. Schwingarm nach einem der vorherigen Ansprüche,
**dadurch gekennzeichnet,**
**dass** die Gelenkachsen der ersten Buchse (4) und der zweiten Buchse (9) senkrecht zueinander stehen.

5. Schwingarm nach einem der vorherigen Ansprüche,
**dadurch gekennzeichnet,**
**dass** die Enden der genannten elastischen Blöcke (6), die an den Innenflanken (8) des entsprechenden Endrings (2) fest angebracht sind, gegenüber dieser ersten Buchse (4) zum anderen Ende des Schwingarms hin verschoben sind, so dass diese Blöcke zusammen eine Zickzackform bilden.

6. Schwingarm nach einem der vorherigen Ansprüche,
**dadurch gekennzeichnet,**
**dass** die genannte zweite Buchse (9) mit dem entsprechenden Ring (3) innen durch zwei radiale, elastische Arme (11) verbunden ist, die einander diametral gegenüber liegen und senkrecht zur Längsachse des Schwingarms verlaufen.

7. Schwingarm nach einem der vorherigen Ansprüche,
**dadurch gekennzeichnet,**
**dass** an dieser zweiten Buchse (9) zwei elastische Anschlagblöcke in Längsrichtung (12) für den Schwingarm sitzen.
